# FASCICULE DE BREVET EUROPEEN

(11) **EP 0 378 596 B1**
(45) Date de publication et mention de la délivrance du brevet: **20.04.1994**
(21) Numéro de dépôt: 89904760.9
(22) Date de dépôt: 05.05.1989
(51) Int. Cl.: H02K 21/24, H02K 1/14

(54) **MOTEUR ELECTRIQUE SYNCHRONE DI- OU POLYPHASE A ROTOR EN FORME DE DISQUE**
ZWEI- ODER MEHRPHASIGER ELEKTRISCHER SYNCHRONMOTOR MIT EINEM SCHEIBENFÖRMIGEN LÄUFER
TWO-PHASE OR MULTIPHASE SYNCHRONOUS ELECTRIC MOTOR WITH DISK-SHAPED ROTOR

(30) Priorité: 10.06.1988 CH 2340/88
(43) Date de publication de la demande: 25.07.1990
(73) Titulaire: PORTESCAP, 2300 La Chaux-de-Fonds (CH)
(72) Inventeur: OUDET, Claude, F-25000 Besançon (FR)
(74) Mandataire: Hranitzky, Wilhelm Max
(86) Numéro de dépôt international: CH8900082
(87) Numéro de publication internationale: WO8912346

(56) Documents cités:
- FR-A- 2 078 296
- FR-A- 2 121 040
- FR-A- 2 153 113
- GB-A- 2 067 025

## Description

La présente invention concerne un moteur électrique synchrone di- ou polyphasé comportant une partie de rotor en forme de disque annulaire plan, aimanté de façon à présenter, sur chacune de ses surfaces planes, au moins une série de pôles magnétiques disposés régulièrement le long d'une zone annulaire, ladite partie de rotor étant solidaire d'un arbre du moteur, monté de façon rotative par rapport à un ensemble de stator, cet ensemble de stator comportant au moins deux groupes de parties polaires, de configuration essentiellement plane, disposées essentiellement radialement par rapport à l'arbre du moteur, au moins d'un côté de la partie de rotor, chacune des parties polaires faisant partie d'un circuit magnétique élémentaire respectif, présentant un entrefer dans lequel est disposée ladite partie de rotor, l'ensemble de stator comportant en outre au moins deux bobines électriques de commande, entourant chacune au moins un desdits groupes de parties polaires.

Dans les moteurs de ce type, tels qu'ils sont décrits par exemple dans la demande de brevet internationale publiée sous le No WO 87/03751 ou, dans une autre formed'exécution, dans le brevet suisse No 637 508, les circuits magnétiques élémentaires sont fermés par des portions de pièces, frittées ou constituées par des toles en un matériau perméable, formant les parties polaires du stator.

Ces moteurs sont généralement d'un prix de revient relativement élevé et présentent des dimensions extérieures assez grandes par rapport au diamètre de leur rotor.

L'invention vise principalement à remédier à cet inconvénient et à fournir un moteur dont le stator soit d'une structure particulièrement simple et économique, et dont les dimensions dans le sens radial soient réduites au minimum.

A cet effet, le moteur selon l'invention présente les particularités indiquées dans la partie caractéristique de la revendication 1. Les revendications 2 à 6 décrivent des formes d'exécution préférées d'un tel moteur.

D'autres caractéristiques et avantages d'un moteur selon l'invention ressortiront de la description donnée ci-après, à titre d'exemple, d'une forme de réalisation de ce moteur, illustrée dans le dessin annexé, dans lequel
la Fig. 1 est vue de dessous de la partie supérieure de l'ensemble de stator d'un moteur selon l'invention, et
la Fig. 2 est une vue en coupe axiale du moteur selon la ligne II-2 de la Fig. 1.

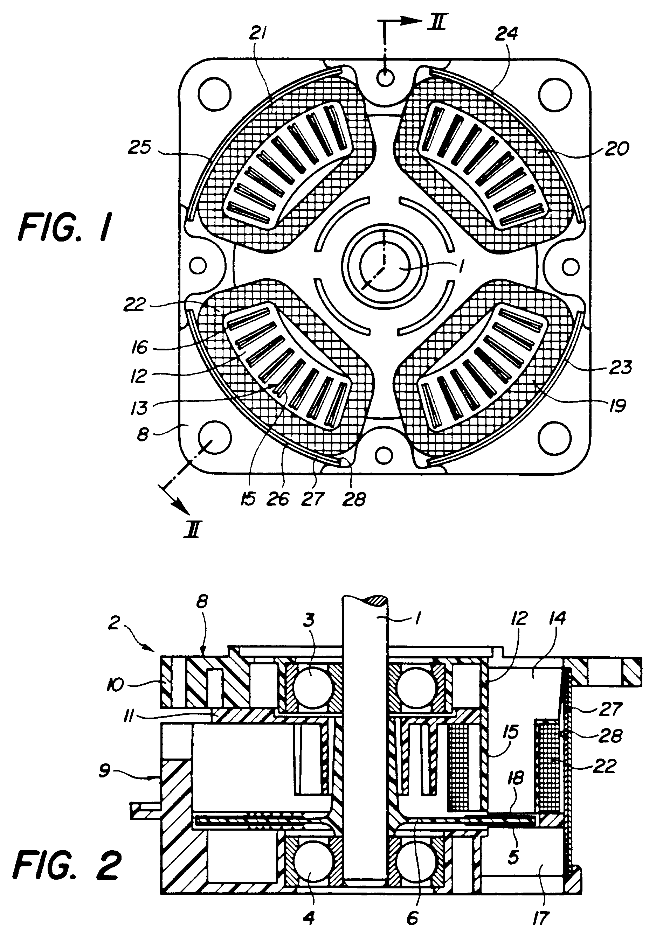

Le moteur représenté aux Fig. 1 et 2 comporte un arbre 1 monté de façon rotative dans un ensemble de stator désigné par la référence 2, au moyen de deux roulements à billes 3 et 4. Un disque annulaire aimanté 5 est fixé sur une partie annulaire d'un support de rotor 6, ce dernier présentant par ailleurs une partie tubulaire 7, solidaire de l'arbre 1. Le disque 5 est aimanté axialement, de façon à présenter sur chacune de ses faces, le long d'une zone annulaire, des pôles magnétiques, de préférence de polarité alternante, comme dans le cas du moteur décrit dans le brevet suisse susmentionné No 637 508, dont le fonctionnement est similaire à celui du présent moteur.

L'ensemble de stator 2 comporte essentiellement deux sous-ensembles, à savoir un demi-stator supérieur 8 et un demi-stator inférieur 9. Comme le montre en particulier la Fig. 2, le demi-stator 8 comprend deux parties en matière plastique 10 et 11, la partie 10 comportant en particulier des portions de support 12 de parties polaires 13, constituées chacune par deux pièces en tôle de Fe-Si, telles que 14 (Fig. 2). Les portions de support 12 présentent des fentes 15, accessibles dans le sens axial et dont les parois latérales sont orientées radialement. Les pièces 14 sont insérées dans ces lentes de manière à être appliquées contre les dites parois latérales et donc à être elles-mêmes orientées essentiellement radialement par rapport à l'arbre du moteur. Cette position, et en particulier l'écartement des pièces 14 sur leur bord extérieur, peut être assurée par une portion convexe, telle que représentée par 16, formée dans les fentes, sur le côté extérieur de celles-ci. Les parties polaires 13 présentent ainsi une section transversale correspondant précisément à la configuration des pôles magnétiques formées sur le disque 5. Le demi-stator inférieur 9 comporte, de façon similaire, des parties polaires constituées par des pièces en tôle, telles que 17 (Fig. 2), disposées en regard des pièces 14, de façon à former un entrefer 18 dans lequel passe le disque aimanté 5.

Dans le présent moteur, les paires de parties polaires ainsi disposées en regard l'une de l'autre sont reparties en quatre groupes, chaque groupe étant couplé avec une bobine électrique de commande respective parmi les bobines 19, 20, 21, 22, visibles à la Fig. 1. Chaque paire de parties polaires fait partie d'un circuit magnétique élémentaire qui est fermé par une partie de culasse commune à un groupe de paires de parties polaires. Quatre parties de culasse 23, 24, 25, 26 sont ainsi prévues dans le présent moteur.

Les parties de culasse sont, dans le présent exemple, formées par des pièces de tôle magnétiquement perméables, par exemple en Fe-Si, ces pièces étant découpées et cambrées de façon à former des parties essentiellement en forme de portions de surface d'un cylindre de révolution, comme les montre, vues dans le sens axial, la Fig. 1. Deux pièces, telles que 27, 28 peuvent être disposées, l'une contre l'autre, dans chaque partie de culasse et sont ensemble maintenues dans les deux demi-stators 8, 9, comme le montre en particulier la Fig. 2. La Fig. 2 montre, en outre, comment les pièces de tôle, telles que 14 et 17, viennent en contact par leur côté extérieur avec la partie de culasse correspondante 26. Lors du montage, les pièces 17 et 26 sont par exemple disposées dans le demi-stator inférieur 9, puis le demi-stator supérieur 8, dans lequel les pièces 14 ont été insérées, est assemblé avec le demi-stator 9. La forme de la pièce 14 montrée à la Fig. 2 peut faciliter le montage et assurer la bonne fermeture du circuit magnétique élémentaire.

La structure de culasse du présent moteur est beaucoup moins critique du point de vue des tolérances dimensionelles qu'une construction dans laquelle la culasse serait constituée par un tube cylindrique. Les parties de culasse peuvent être réalisées en utilisant des tôles disponibles dans le commerce, au moyen d'opérations de découpage et de cambrage très simples, la tolérance sur le rayon de courbure étant relativement large du fait de la flexibilité des tôles, alors que la précision diamétrale d'un tube cylindrique implique un prix de revient relativement élevé. La structure présentée permet, en outre, très aisément et de façon peu coûteuse, de réaliser une culasse feuilletée et assure une bonne dissipation de chaleur sur les surfaces métalliques importantes qui se trouvent en contact avec l'air ambiant. Etant donné que les flux magnétiques sont orientés axialement dans les parties de culasse, la présente structure fournit des circuits magnétiquement pratiquement indépendants, permettant de réaliser des moteurs dans lesquels les bobines peuvent être utilisées partiellement comme bobines captrices ainsi que des moteurs di- ou tétra-phasés très performants.

## Revendications

1. Moteur électrique synchrone di- ou polyphasé, comportant une partie de rotor en forme de disque annulaire (5), aimanté axialement, de façon à présenter sur chacune de ses surfaces planes au moins une série de pôles magnétiques disposés régulièrement le long d'une zone annulaire, ladite partie de rotor étant solidaire d'un arbre (1) du moteur monté de façon rotative par rapport à un ensemble de stator (2), cet ensemble de stator comportant au moins deux groupes de parties polaires (13), de configuration essentiellement plane, disposées essentiellement radialement par rapport à l'arbre (1) du moteur, au moins d'un côté de la partie de rotor, chacune des parties polaires (13) faisant partie d'un circuit magnétique élémentaire respectif, présentant un entrefer (18) dans lequel est disposée ladite partie de rotor (5), ledit ensemble de stator comportant en outre, au moins deux bobines électriques de commande (19-22) entourant chacune au moins un desdits groupes de parties polaires (13), caractérisé en ce que l'ensemble de stator (2) comporte au moins deux parties de culasse séparées (23-26), essentiellement en forme de portions de surface d'un cylindre de révolution, chaque partie de culasse (23-26) étant disposée en contact avec les parties polaires (13) d'un groupe de parties polaires.

2. Moteur selon la revendication 1, caractérisé en ce que les parties de culasse sont constituées par des pièces de tôle magnétiquement perméable (27,28), découpées et cambrées.

3. Moteur selon la revendication 2, caractérisé en ce que l'ensemble de stator (2) comporte des portions de support de stator (12) en un matériau non-magnétique, dans lesquelles sont insérées les parties polaires (13) et qui supportent les parties de culasse (23-26).

4. Moteur selon l'une des revendications précédentes, caractérisé en ce que chaque circuit magnétique élémentaire comprend deux parties polaires (14,17) disposées en regard l'une de l'autre, essentiellement dans un plan radial du moteur, de part et d'autre de la partie de rotor (5), ainsi qu'une portion d'une partie de culasse avec laquelle les parties polaires sont en contact.

5. Moteur selon l'une des revendications précédentes, caractérisé en ce que chaque partie polaire est formée par deux pièces de tôle non-magnétique, formant entre elles un angle tel qu'elles soient disposées chacune essentiellement radialement par rapport à l'arbre du moteur.

6. Moteur selon les revendications 3 et 5, caractérisé en ce que lesdites pièces de tôle sont insérées dans une fente de la portion de support formée de façon à déterminer la position angulaire de chacune des deux pièces formant une partie polaire.

## Claims

1. Bi- or polyphase synchronous electric motor comprising a rotor part shaped as an annular disc (5) magnetized axially so as to exhibit, on each of its plane surfaces, at least one series of magnetic poles disposed regularly along an annular zone, said rotor part being integral with a shaft (1) of the motor mounted rotatably with respect to a stator assembly (2), this stator assembly comprising at least two groups of polar parts (13) of substantially plane configuration disposed substantially radially with respect to the motor shaft (1) at least at one side of the rotor part, each of the polar parts (13) forming part of a respective elementary magnetic circuit having an air-gap (18) in which is disposed said rotor part (5), said stator assembly further comprising at least two electric control coils (19 - 22) surrounding each at least one of said groups of polar parts (13), characterized in that the stator assembly (2) comprises at least two separate yoke parts (23 - 26) shaped substantially as portions of the surface of a revolution cylinder, each yoke part (23 - 26) being disposed in contact with the polar parts (13) of a group of polar parts.

2. Motor according to claim 1, characterized in that the yoke parts are comprised of magnetically permeable, cut-out and bent pieces (27, 28) of sheet material.

3. Motor according to claim 2, characterized in that the stator assembly (2) comprises stator support portions (12) of non-magnetic material into which are inserted the polar parts (13) and which support the yoke parts (23 - 26).

4. Motor according to one of the preceding claims, characterized in that each elementary magnetic circuit comprises two polar parts (14, 17) disposed opposite each other substantially in a radial plane of the motor on both sides of the rotor part (5), as well as a portion of a yoke part with which the polar parts are in contact.

5. Motor according to one of the preceding claims, characterized in that each polar part is formed by two pieces of non-magnetic sheet material forming between them such an angle that they are each disposed substantially radially with respect to the motor shaft.

6. Motor according to claims 3 and 5, characterized in that said pieces of sheet material are inserted into a slot of the support portion formed so as to determine the angular position of each of the two pieces forming a polar part.

## Patentansprüche

1. Zwei- oder mehrphasiger elektrischer Synchronmotor mit einem scheibenförmigen Rotorteil (5), welcher axial magnetisiert ist, derart, dass er auf jeder seiner ebenen Oberflächen mindestens eine Reihe von Magnetpolen aufweist, die regelmässig entlang einer ringförmigen Zone angeordnet sind, wobei der genannte Rotorteil mit einer Motorwelle (1) fest verbunden ist, welche drehbar in Bezug auf eine Statoranordnung (2) gelagert ist, wobei diese Statoranordnung mindestens zwei Gruppen von Polteilen (13) aufweist, die im wesentlichen eben ausgebildet sind und im wesentlichen radial in Bezug auf die Motorwelle (1) zumindest auf einer Seite des Rotorteils angeordnet sind, wobei jedes der Polteile (13) Teil eines entsprechenden elementaren Magnetkreises ist, welcher einen Luftspalt (18) besitzt, in dem der genannte Rotorteil (5) angeordnet ist, und wobei die genannte Statoranordnung ferner mindestens zwei elektrische Steuerspulen (19 - 22) aufweist, die jeweils mindestens eine der genannten Gruppen von Polteilen (13) umgeben, dadurch gekennzeichnet, dass die Statoranordnung (2) mindestens zwei getrennte Jochteile (23 - 26) aufweist, die im wesentlichen die Form von Teilen der Oberfläche eines Drehzylinders haben, wobei jedes Jochteil (23 - 26) in Kontakt mit den Polteilen (13) einer Gruppe von Polteilen angeordnet ist.

2. Motor nach Patentanspruch 1, dadurch gekennzeichnet, dass die Jochteile von ausgeschnittenen und gekrümmten Teilen (27, 28) aus magnetisch permeablem Blech gebildet werden.

3. Motor nach Patentanspruch 2, dadurch gekennzeichnet, dass die Statoranordnung (2) Statorträgerteile (12) aus nicht magnetischem Material aufweist, in welche die Polteile (13) eingesetzt sind und welche die Jochteile (23 - 26) tragen.

4. Motor nach einem der vorhergehenden Patentansprüche, dadurch gekennzeichnet, dass jeder elementare Magnetkreis zwei einander gegenüberliegend angeordnete Polteile (14, 17) aufweist, die im wesentlichen in einer Radialebene des Motors zu beiden Seiten des Rotorteils (5) liegen, sowie ein Stück eines Jochteils, mit dem die Polteile in Kontakt stehen.

5. Motor nach einem der vorhergehenden Patentansprüche, dadurch gekennzeichnet, dass jedes Polteil von zwei Teilen aus nicht magnetischem Blech gebildet wird, welche untereinander einen solchen Winkel einschliessen, dass sie im wesentlichen radial in Bezug auf die Motorwelle angeordnet sind.

6. Motor nach den Patentansprüchen 3 und 5, dadurch gekennzeichnet, dass die genannten Blechteile in einen Schlitz des Trägerteils eingesetzt sind, welcher so ausgebildet ist, dass er die Winkelstellung jedes der beiden Teile, die ein Polteil bilden, bestimmt.
